# EUROPÄISCHE PATENTSCHRIFT

(11) **EP 2 621 839 B1**
(45) Veröffentlichungstag und Bekanntmachung des Hinweises auf die Patenterteilung: **13.05.2015**
(21) Anmeldenummer: 11772874.1
(22) Anmeldetag: 27.09.2011
(51) Int. Cl.: B65G 47/08, B65G 47/84, B65G 57/14

(54) **VORRICHTUNG UND VERFAHREN ZUM REIHEN- UND/ODER SPALTENWEISEN BESTÜCKEN VON TRANSPORTPALETTEN MIT VERPACKUNGSEINHEITEN**
INSTALLATION AND METHOD FOR LOADING TRANSPORT PALLETS WITH PACKING UNITS IN ROWS AND/OR COLUMNS
INSTALLATION ET PROCÉDÉ POUR DÉPOSER DES UNITÉS D' EMBALLAGE SUR DES PALETTES DE TRANSPORT EN RANGÉES ET/OU EN COLONNES

(30) Priorität: 27.09.2010 DE 202010013608 U
(43) Veröffentlichungstag der Anmeldung: 07.08.2013
(73) Patentinhaber: Polman, Eckhard, 46569 Hünxe (DE)
(72) Erfinder: Polman, Eckhard, 46569 Hünxe (DE)
(74) Vertreter: Grosse Schumacher Knauer von Hirschhausen
(86) Internationale Anmeldenummer: PCT/EP2011/004821
(87) Internationale Veröffentlichungsnummer: WO 2012/048799

(56) Entgegenhaltungen:
- EP-A1- 0 221 408
- DE-A1-102008 001 324
- US-A- 3 302 803

## Beschreibung

### GEBIET DER ERFINDUNG

Die Erfindung betrifft eine Palettiervorrichtung und ein Verfahren zum reihen- und/oder spaltenweisen Bestücken von Transportpaletten mit Verpackungseinheiten mit den Merkmalen des Oberbegriffs des Anspruchs 1 bzw. 7. Demnach ist zum Bestücken von Transportpaletten mit Verpackungseinheiten in mindestens einer Lage von Verpackungseinheiten eine Zufördereinrichtung zum Heranführen der Verpackungseinheiten in die Nähe der Transportpalette und einer Zustelleinrichtung zum Zustellen einer Transportpalette mit den herangeführten Verpackungseinheiten in Reihen und/oder Spalten vorgesehen.

### TECHNOLOGISCHER HINTERGRUND

Fertig verpackte Produkte, welche in Tüten, Säcken oder Kartons oder anderen Behältern verpackt sind, werden mit Hilfe eines Palettierers lagenweise auf eine Transportpalette geschichtet. Um das Herbeiführen der Verpackungseinheiten und das Zustellen der Transportpalette mit den Verpackungseinheiten automatisiert ablaufen zu lassen, ist eine Vielzahl von Arbeitsschritten erforderlich. Das Produkt, allgemein die Verpackungseinheiten, wird dem Palettierer üblicherweise über Förderbänder oder Rollenbahnen zugeführt. Der Palettierer dreht und wendet das Produkt prozessgesteuert, so dass eine dichte Schichtung auf der Palettenfläche in mindestens einer Lage erreicht wird. Nach vollständiger "Palettierung" wird die beladene Palette zwischengelagert oder sogleich weitertransportiert und zuvor gegebenenfalls mit einer Umverpackung versehen. Als Umverpackung kann man unter anderem auch Wickel- oder Schrumpffolien oder verschweißte Plastiksäcke oder jede andere Umverpackungsart verstehen. Danach ist das Produkt fertig zur Zwischenlagerung oder zum Transport.

Bei der Palettierung werden bislang die Verpackungseinheiten in Förderrichtung der Zufördereinrichtung hintereinander in einer Reihe gesammelt. Nachfolgend wird eine vollständige Reihe von Verpackungseinheiten mit einem Schieber oder dergleichen quer zur Zuförderrichtung auf einen Zwischenboden verschoben. Anschließend wird die nächste Reihe an Verpackungseinheiten zusammengestellt und als vollständige Reihe wiederum quer verschoben. Der Vorgang wird so oft wiederholt, bis die Ladefläche der Transportpalette möglichst vollständig genützt ist. Danach kann die so in Spalten und Reihen erstellte Schicht aus Verpackunseinheiten noch mal in sich ausgerichtet werden. Hierzu dienen geeignete Anschläge. Erst danach wird der unter der Lage von Verpackungseinheit befindlicher Zwischenboden oder Rollladen seitlich fortgezogen, so dass die Stapellage auf einer darunter sich befindenden Palette abgelegt wird. Insgesamt erfolgt der Prozess also im Taktbetrieb und nicht im kontinuierlichen Betrieb wie es an sich wünschenswert wäre.

### DARSTELLUNG DER ERFINDUNG

Der Erfindung liegt das Problem zugrunde, bei einer gattungsgemäßen Palettiervorrichtung ein kontinuierliches Palettieren zu ermöglichen. Zur Lösung dieser Aufgabe wird eine Palettiervorrichtung und ein Verfahren mit den Merkmalen des Anspruchs 1 bzw. 7 vorgeschlagen. Demnach ist vorgesehen, dass die Zustelleinrichtung ein Endlosfördermittel umfasst, das in liegender Anordnung betrieben wird und aus mindestens zwei, als Transportschenkel dienenden, Fördertrümen besteht. Das liegend angeordnete Endlosfördermittel ist als Ganzes mit einer Querkomponente zur Ersteckungsrichtung eines seiner Transportschenkel um mindestens eine Verpackungseinheitsbreite und/oder -höhe verfahrbar.

Dadurch wird es möglich, die durch die Zustelleinrichtung von der Zufördereinrichtung kontinuierlich übernommenen Verpackungseinheiten auf einem horizontalen Förderweg von einem ersten Fördertrum des Endlosfördermittels einem zweiten Fördertrum des Endlosfördermittels zuzuführen und die Verpackungseinheiten entlang des zweiten Fördertrums der Reihe nach direkt auf der Transportpalette in dichter Folge abzulegen. Mit Hilfe der mit einer Querkomponente (bezogen auf den zweiten Transportschenkel) erfolgenden Verlagerung des Endlosfördermittels als Ganzes um mindestens eine Verpackungseinheitsbreite oder -höhe kann nach der Komplettierung einer Stapelreihe umgehend mit dem Zusammenstellen einer zweiten Stapelreihe unmittelbar auf der Transportpalette fortgefahren werden. Dieser Vorgang wiederholt sich so oft, bis die gewünschte Palettenfläche, insbesondere die gesamte Palettenfläche, nach Länge und Breite mit den Verpackungseinheiten zugestellt ist. Danach kann das Endlosfördermittel mit der Zustelleinrichtung um mindestens eine Verpackungseinheitshöhe verfahren werden und der gleiche Zustellprozess kann in einer zweiten Lage von Verpackungseinheit fortgesetzt werden. Grundsätzlich ist es aber auch möglich, mit der Palettiervorrichtung erst vertikale Lagen von Verpackungseinheiten aufzuschichten und danach weitere vertikale Verpackungsschichten zu bilden. In diesem Falle wird das Endlosfördermittel nach Komplettierung einer Reihe von Verpackungseinheiten insgesamt angehoben, um die nächst höher gelegene Lage an Verpackungseinheiten zu bilden. Für das vertikale Stapeln kann die Zufördereinrichtung zumindest an ihrem Abgabeende höhenverstellbar sein.

Während es grundsätzlich möglich ist, die Orientierung der Zuförderstrecke bezüglich der Erstreckungsrichtung der Fördertrümmer des Endlosfördermittels der Zustelleinrichtung frei zu wählen, wird es bevorzugt, wenn die Erstreckungsrichtung mit der Querverfahrrichtung der Zustelleinrichtung möglichst vollständig übereinstimmt. Dadurch wird unter anderem das kontinuierliche Übernehmen der zugeförderten Verpackungseinheiten durch die Zustelleinrichtung vereinfacht.

Die Querverfahrrichtung der Zustelleinrichtung zu dem die Verpackunseinheiten abgebenden Transportschenkel kann grundsätzlich in einem großen Winkelbereich erfolgen, der prinzipiell zwischen 1° und 179° liegt. Wenn dieser Winkel näher an 90° liegt, insbesondere zwischen 45° und 145° und ganz besonders bevorzugt 90° beträgt, wird dadurch die Anlagengröße besonders kompakt.

Grundsätzlich reicht es aus, wenn das Endlosfördermittel zwei Fördertrümmer aufweist. Vorzugsweise bildet das liegend angeordnete Endlosfördermittel aber einen Polygonzug aus mehr als zwei Transportschenkeln. Dadurch kann unter anderem eine gewisse Förderteilstrecke der Zufördereinrichtung parallel zu dem die Verpackungseinheiten übernehmenden Trum des Endlosfördermittels verlaufen, was unter anderem die Synchronisation der beiden Bewegungen und/oder die Ausrichtung der Verpackungseinheiten erleichtert. Ganz besonders bevorzugt wird für das Endlosfördermittel ein dem Grundriss der Transportpalette entsprechender Polygonzug des Endlosfördermittels, also in vielen Anwendungen ein rechteckiger Polygonzug, gewählt. Zwischen den einzelnen, das heißt im zuletzt genannten Fall den vier Transportschenkeln des Endlosfördermittels, befinden sich in geeignete Umlenkeinrichtung wie Umlenkräder oder -rollen.

Es ist nun auf verschiedene Weise möglich, mit dem liegend angeordneten Endlosfördermittel die Verpackungseinheiten entlang der Fördertrümmer und um die Umlenkungen herum zu transportieren: Grundsätzlich ist es möglich ein direktes Ablegen der Verpackungseinheiten auf der Transportpalette dadurch zu bewirken, dass die Verpackungseinheiten an einem in wesentlichen vertikal orientierten Haltemittel, also seitlich hängend, bewegt werden. Um die Platzierungsflexibilität für die Verpackungseinheiten möglichst groß zu gestalten, wird es jedoch bevorzugt, wenn die Haltemittel für den hängenden Transport der Verpackungseinheiten eine im wesentlichen horizontale Ausrichtung haben, so dass die Verpackungseinheit unter den Haltemitteln hängend transportiert wird. Hierfür können die verschiedensten Mittel für hängenden Transport, wie Greifer, Sauger, Elektromagnete und andere verwendet werden. Das ermöglicht es unter anderem, die Verpackungseinheiten in einer auf der Zufördereinrichtung aufliegenden Anordnung auf einfache Weise, nämlich von liegendem in einen hängenden Transport zu übernehmen. Sofern Verpackungseinheiten unterschiedlicher Höhe auf den selben oder verschiedenen Transportpaletten zu stapeln sind, kann eine Höhenveränderlichkeit der Zufördereinrichtung und/oder des liegenden Endlosfördermittels vorgesehen sein. Eine derartige Höhenveränderlichkeit ist auch für das Stapeln von Verpackungseinheiten in mehreren Lagen übereinander von Vorteil. Beim hängenden Transport können auch, gegebenenfalls verstellbare, Anschläge für unterschiedliche Positionierungen der Verpackungseinheiten bezüglich des liegenden Endlosfördermittels zum Einsatz kommen. Derartige -Anschläge können auch die Lagesicherung, insbesondere die Kippsicherung der Verpackungseinheit während des Transportes entlang des Fördertrümmer verbessern. Grundsätzlich können solche Anschläge auch unter die Verpackungseinheiten greifend in beweglicher oder starrer Anordnung vorgesehen sein. Hierdurch wird unter anderem die Transportsicherheit erhöht und/oder das Spektrum an zulässigen Verpackungseinheitsgewichten, welches palettiert werden kann, vergrößert. Grundsätzlich ist also ein vertikal oder horizontal hängender Transport nicht zwingend.

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können

Weitere Einzelheiten, Merkmale und Vorteile des Gegenstandes der Erfindung ergeben sich aus den Unteransprüchen, sowie aus der nachfolgenden Beschreibung und der zugehörigen Zeichnung, in der - beispielhaft - ein Ausführungsbeispiel einer Palettiervorrichtung zum reihen- und/oder spaltenweisen Bestücken von Transportpaletten mit Verpackungseinheiten dargestellt ist. Auch einzelne Merkmale der Ansprüche oder der Ausführungsformen können mit anderen Merkmalen anderer Ansprüche und Ausführungsformen kombiniert werden.

### KURZBESCHREIBUNG DER FIGUREN

In der Zeichnung zeigt
- Fig. 1: von einer Palettiervorrichtung jeweils in Draufsicht und in linker Seitenansicht (rechts daneben) Arbeitssequenzen a) bis h) für das Beschicken (Zustellen) einer Transportpalette mit Verpackungseinheiten in dichter Anordnung sowie
- Fig. 2: ein Haltemittel zum vertikal hängenden Transport von Verpackungseinheiten mit einem Endlosfördermittel in liegender Anordnung.

### DETAILLIERTE BESCHREIBUNG VON AUSFÜHRUNGSBEISPIELEN

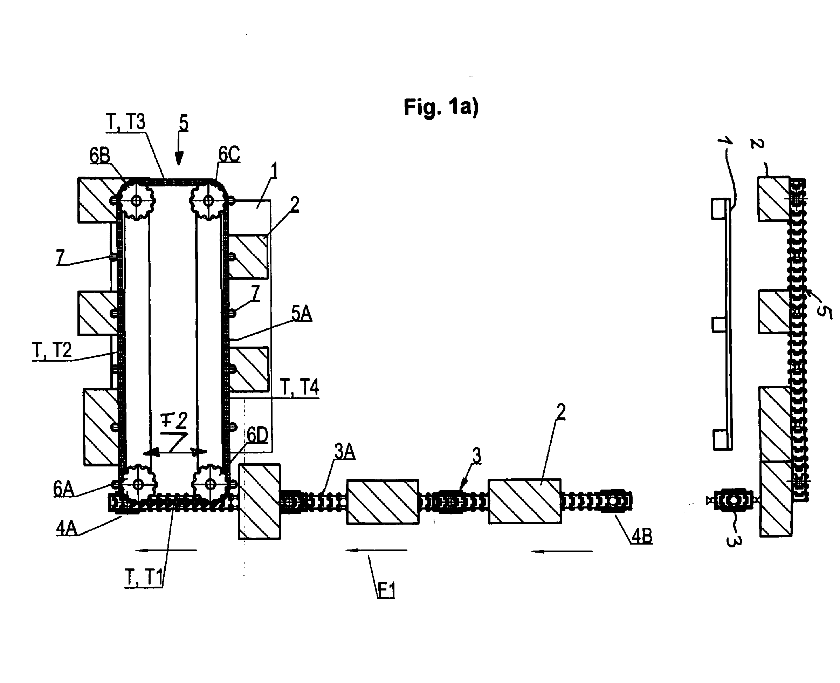

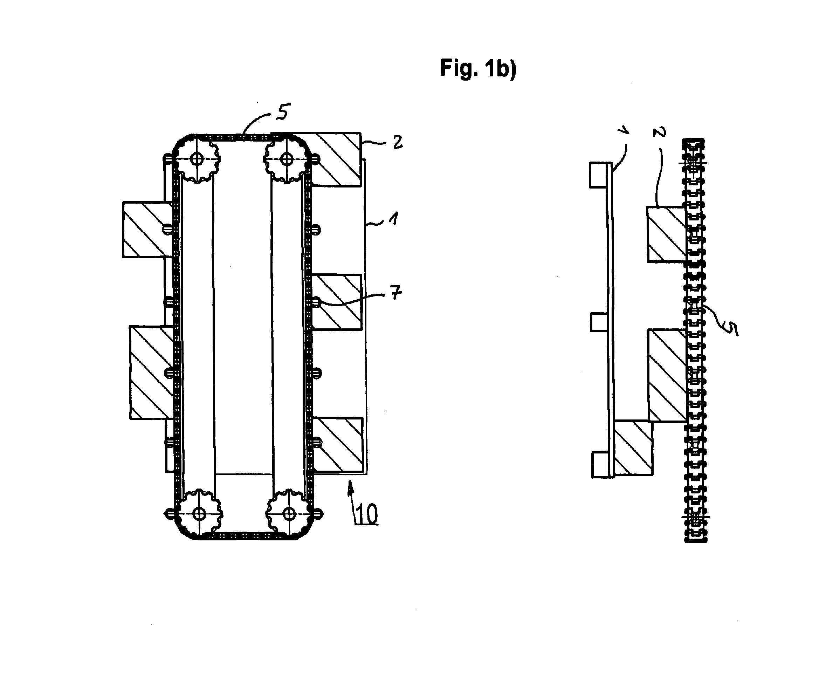

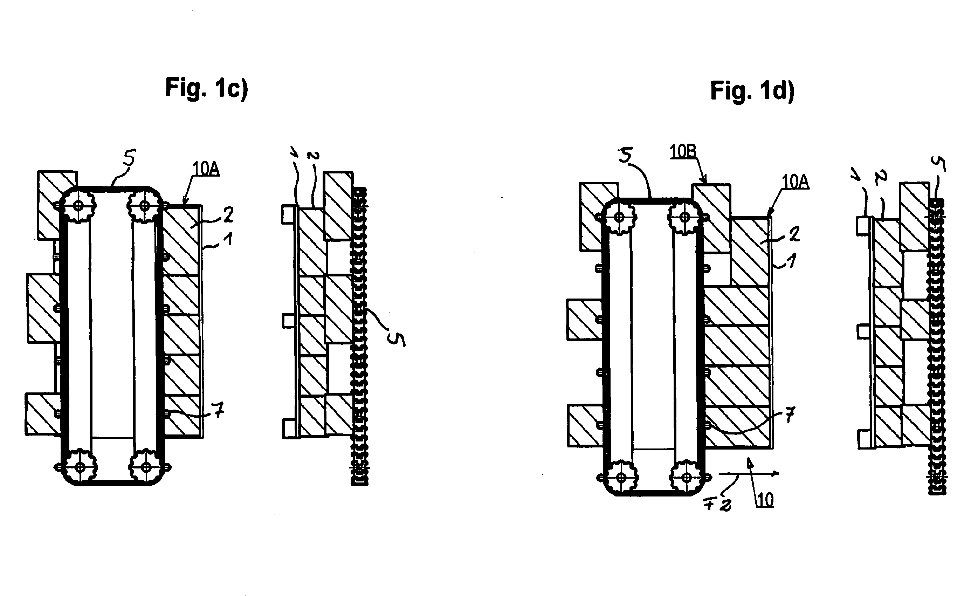

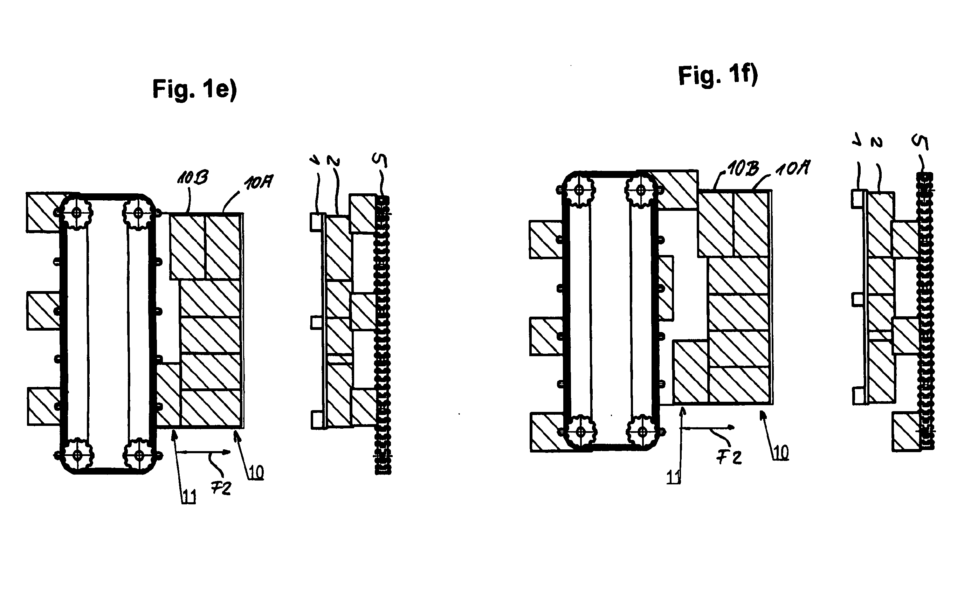

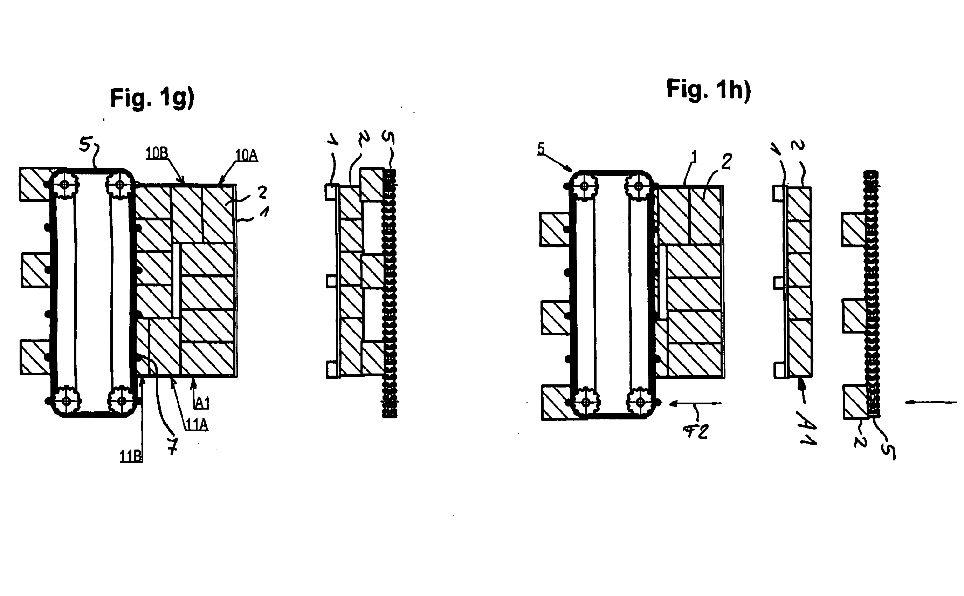

Am Beispiel der Arbeitsposition a) in Figur 1 wird die Palettiervorrichtung in Ansicht von oben und in linker Seitenansicht näher erläutert: Eine Transportpalette 1 soll mit im Grundriss verschieden großen und verschieden ausgerichteten Verpackungseinheiten 2 etwa gleicher Höhe kontinuierlich zugestellt werden. Hierzu ist eine Zufördereinrichtung 3 in Gestalt eines Endlosfördermittels vorgesehen, dass aus einer Vielzahl von miteinander verschwenkbaren Kettengliedern bestehen kann, die eine (stehend) umlaufende Transportkette bilden und im Bereich von Umlenkeinrichtungen 4A, 4B um 180° umgelenkt wird, wobei die Verpackungseinheiten 2 auf dem so genannten Obertrum 3A aufliegend in einer ersten Förderrichtung F1 transportiert werden.

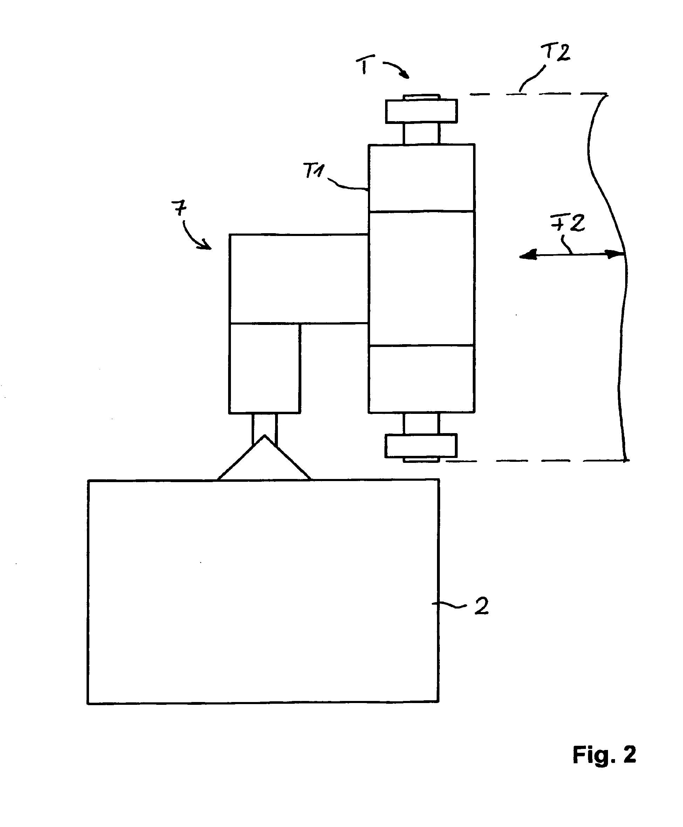

Oberhalb der Transportpalette 1 befindet sich eine Zustelleinrichtung 5, die als Polygonzug in Rechteckform konfiguriert ist. Ein Endlosfördermittel 5A, dass ähnlich wie bei der Zufördereinrichtung 3 aus einer um Umlenkeinrichtungen 6A-6D mit vertikalen Drehachsen geführt ist und insbesondere an den Umlenkeinrichtungen antreibbar ist, ist mit Haltemitteln 7 ausgestattet, die einen nach unten hängenden Transport der Verpackungseinheiten 2 gestatten (siehe Figur 2). Dementsprechend befindet sich die Transportebene bei der Zuförderung geringfügig unterhalb der Zustelleinrichtung 5, wie insbesondere aus dem Sequenzbild h) ersichtlich.

Die Zustellung der Transportpalette 1 mit Verpackungseinheiten 2 läuft nun so ab, dass zunächst in einer ersten Reihe 10 oder Halbreihe 10A -siehe Sequenzbild b-die aufeinander folgenden Verpackungseinheiten 2 dicht neben einander auf der Transportpalette 1 direkt abgelegt werden, bis der im Sequenzbild c) gezeigte Zustand erreicht ist. Wie aus Sequenzbild d) ersichtlich ist die zuletzt in der ersten Stapel(halb)reihe 10A eingefügte Verpackungseinheit schmaler als die übrigen und im Querformat zu diesen angeordnet, um die Stapelfläche best möglich zu nutzen. Demnach kann in diesem Bereich die erste Stapelreihe 10 noch mit einer zweiten quer orientierten Verpackungseinheit bestückt werden (Stapelhalbreihe 10B). Deshalb wird, wie im Vergleich der Sequenzbilder c) und d) ersichtlich, eine Relativbewegung zwischen der Transportpalette 1 und der Zustelleinrichtung 5 parallel zu der ersten Förderrichtung F1 vorgenommen. Danach wird zur Bestückung einer zweiten Stapelreihe 11 eine weitere Relativbewegung zwischen der Transportpalette 1 und der Zustelleinrichtung 5 vorgenommen und die zweite Stapelreihe 11 zugestellt. Der Zuförderstrom der weiteren Verpackungseinheiten ist in den Sequenzbildern b) bis h) der Übersichtlichkeit halber fortgelassen. Um auch die zweite Stapelreihe 11 mit neben einander positionierten Verpackungseinheiten zustellen zu können, kann zu diesem Zweck die Relativbewegung zwischen der Transportpalette 1 und der Zustelleinrichtung 5 fortgesetzt werden, wie aus dem Vergleich des Sequenzbildes e) mit dem Sequenzbild f) ersichtlich. Aus dem Sequenzbild b) ist ersichtlich, wie die erste Lage an Verpackungseinheiten die Transportpalette in optimaler Flächennutzung zustellt. Danach folgt eine weitere Relativbewegung zwischen der Transportpalette 1 und der Zustelleinrichtung 5 derart, dass nunmehr eine weitere Lage von Verpackungseinheiten oberhalb der Verpackungseinheiten der ersten Stapelreihe 10, 10A, 10B aufgeschichtet werden kann. Diese Relativbewegung ist in dem Sequenzbild h), wie ersichtlich, noch nicht abgeschlossen.

Bei dem dargestellten und in soweit bevorzugten Ausführungsbeispiel verläuft also einer der Transportschenkel T, dass heißt im Ausführungsbeispiel das Fördertrumm T1 des Endlosfördermittels 5A, parallel zur Zuförderrichtung der Zufördereinrichtung 3, dass heißt parallel zur ersten Förderrichtung F1.

### BEZUGSZEICHENLISTE

- 1: Transportpalette
- 2: Verpackungseinheiten
- 3: Zufördereinrichtung
- 3A: Obertrumm
- 4A: Umlenkeinrichtung
- 4B: Umlenkeinrichtung
- 5: Zustelleinrichtung
- 5A: Endlosfördermittel
- 6A-6D: Umlenkeinrichtungen
- 7: Haltemittel
- 10: Erste Stapelreihe
- 10A: Halbreihe
- 10B: Halbreihe
- 11: Zweite Stapelreihe
- 11A: Halbreihe
- 11B: Halbreihe

- A1: erste Lage
- F1: erste Förderrichtung
- F2: Querverfahrrichtung
- T: Transportschenkel
- T1-4: Fördertrumm

## Patentansprüche

1. Palettiervorrichtung zum reihen- und/oder stapelweisen Bestücken von Transportpaletten (1) mit Verpackungseinheiten (2) in mindestens einer Lage (A1) von Verpackungseinheiten (2) mit einer Zufördereinrichtung (3) zum Heranführen der Verpackungseinheiten in die Nähe der Transportpalette (1) und mit einer Zustelleinrichtung (5) zum Zustellen einer Transportpalette (1) mit den herangeführten Verpackungseinheiten (2),
**dadurch gekennzeichnet, dass**
die Zustelleinrichtung (5) ein Endlosfördermittel (5A) umfasst,
das Endlosfördermittel (5A) in liegender Anordnung mindestens zwei als Transportschenkel (T) dienende Fördertrümmer (T1, T2, T3,...) umfasst und dass
das liegend angeordnete Endlosfördermittel (5A) als Ganzes in einer Querrichtungskomponente zur Erstreckungsrichtung eines seiner Transportschenkel (T) relativ zu der Transportpalette (1) um mindestens eine Verpackungseinheitsbreite oder Teilbreite und/oder -höhe verfahrbar ist.

2. Palettiervorrichtung nach Anspruch 1, **dadurch gekennzeichnet, dass** die erste Förderrichtung (F1) der Zufördervorrichtung (3) parallel zu einer Querverfahrrichtung (F2) der Zustelleinrichtung (5) bezüglich der Transportpalette (1) ausgerichtet ist.

3. Palettiervorrichtung nach Anspruch 1 oder 2, **dadurch gekennzeichnet, dass** Haltemittel (7) zum vertikal hängenden Transport der Verpackungseinheiten (2) an dem liegend angeordneten Endlosfördermittel (5A) vorgesehen sind.

4. Palettiervorrichtung nach einem der Ansprüche 1 bis 3, **dadurch gekennzeichnet, dass** das Endlosfördermittel (5A) einen liegenden Polygonzug aus mehreren Transportschenkeln (T) bildet.

5. Palettiervorrichtung nach Anspruch 4, **dadurch gekennzeichnet, dass** das Endlosfördermittel (5A) einen rechteckigen Polygonzug bildet.

6. Palettiervorrichtung nach einem der Ansprüche 1 bis 5, **dadurch gekennzeichnet, dass** die Querverfahrrichtung (F2) einen Winkel zwischen 1° und 179°, vorzugsweise einen Winkel zwischen 45° und 135° und besonders bevorzugt einen rechten Winkel, mit dem der Ablage der Verpackungseinheiten (2) auf der Transportpalette (1) dienenden Transportschenkel (T) bildet.

7. Verfahren zum reihen- und/oder spaltenweisen Bestücken von Transportpaletten mit Verpackungseinheiten in mindestens einer Lage von Verpackungseinheiten mit einer Zufördereinrichtung zum Heranführen der Verpackungseinheiten in die Nähe der Transportpalette und mit einer Zustelleinrichtung zum Zustellen der Transportpalette mit den herangeführten Verpackungseinheiten, **dadurch gekennzeichnet, dass** die Verpackungseinheiten kontinuierlich mittels eines liegend angeordneten Endlosfördermittels von der Zufördereinrichtung übernommen und entlang eines von mehreren Fördertrümmern des Endlosfördermittels unter Ausbilden einer dicht gepackten Reihe von Verpackungseinheiten unmittelbar auf der Transportpalette abgelegt werden und dass das liegende Endlosfördermittel zum Zustellen einer weiteren Reihe mit Verpackungseinheiten in einer Querrichtung zu der Orientierung der bereits bestückten Reihe/Reihen von Verpackungseinheiten als Ganzes relativ zur Transportpalette verfahren wird.

## Claims

1. A palletizing device for placing packaging units (2) in rows and/or stacks onto transport pallets (1) in at least one layer (A1) of packaging units (2), comprising a conveying device (3) for conveying the packaging units into the vicinity of the transport pallet (1) and comprising a delivery device (5) for delivering a transport pallet (1) comprising the conveyed packaging units (2),
**characterized in that**
the delivery device (5) comprises a continuous conveying means (5A),
in horizontal arrangement, the continuous conveying means (5A) comprises at least two conveying strands (T1, T2, T3, ...), which serve as transport legs (T) and that
the continuous conveying means (5A), which is arranged horizontally, can be moved as a whole relative to the transport pallet (1) by at least one width of a packaging unit or a partial width and/or height in a transverse direction component relative to the direction of extension of one of its transport legs (T).

2. The palletizing device according to claim 1, **characterized in that** the first conveying direction (F1) of the conveying device (3) is oriented parallel to a transverse moving direction (F2) of the delivery device (5) relative to the transport pallet (1).

3. The palletizing device according to claim 1 or 2, **characterized in that** provision is made on the horizontally arranged continuous conveying means (5A) for holding means (7) for a vertically hanging transport of the packaging units (2).

4. The palletizing device according to one of claims 1 to 3, **characterized in that** the continuous conveying means (5A) forms a horizontal polygonal line of a plurality of transport legs (T).

5. The palletizing device according to claim 4, **characterized in that** the continuous conveying means (5A) forms a rectangular polygonal line.

6. The palletizing device according to one of claims 1 to 5, **characterized in that** the transverse moving direction (F2) forms an angle of between 1° and 179°, preferably an angle of between 45° and 135° and particularly preferably a right angle, with the angle of the transport leg (T), which serves to place the packaging units (2) on the transport pallet (1).

7. A method for placing packaging units in rows and/or stacks onto transport pallets in at least one layer of packaging units, comprising a conveying device for conveying the packaging units into the vicinity of the transport pallet and comprising a delivery device for delivering the transport pallet comprising the conveyed packaging units, **characterized in that** the packaging units are taken over continuously by the conveying device by means of a horizontally arranged continuous conveying means and are placed directly onto the transport pallet along one of a plurality of conveying strands of the continuous conveying means by forming a tightly packaged row of packaging units, and that the horizontally located continuous conveying means is moved as a whole relative to the transport pallet for delivering a further row comprising packaging units in a transverse direction to the orientation of the row/rows of packaging units, which has/have already been placed.

## Revendications

1. Dispositif de palettisation pour équiper des palettes de transport (1) de rangées ou de piles d'unités d'emballage (2) en au moins une couche (A1) d'unités d'emballage (2) avec un système d'alimentation (3) destiné à amener les unités d'emballage à proximité de la palette de transport (1) et avec un système de positionnement (5), pour positionner une palette de transport (1) avec les unités d'emballage (2) amenées,
**caractérisé en ce que**
le système de positionnement (5) comprend un moyen de convoyage sans fin (5A),
le moyen de convoyage sans fin (5A) comprend en disposition couchée au moins deux sections de convoyage (T1, T2, T3,...) faisant office de branches de transport T et **en ce que**
le moyen de convoyage sans fin (5A) en position couchée est déplaçable en tant qu'ensemble dans un composant de direction transversale vers la direction d'extension de l'une de ses branches de transport (T) par rapport à la palette de transport (1) d'au moins la valeur d'une largeur d'unité d'emballage ou d'une largeur partielle et/ou d'une hauteur partielle.

2. Dispositif de palettisation selon la revendication 1, **caractérisé en ce que** la première direction de convoyage (F1) du dispositif d'alimentation (3) est orientée à la parallèle d'une direction de déplacement transversale (F2) du système de positionnement (5) par rapport à la palette de transport (1).

3. Dispositif de palettisation selon la revendication 1 ou la revendication 2, **caractérisé en ce que** des moyens de retenue (7) sont prévus sur le moyen de convoyage sans fin (5A) en disposition couchée, pour le transport vertical accroché des unités d'emballage (2).

4. Dispositif de palettisation selon l'une quelconque des revendications 1 à 3, **caractérisé en ce que** le moyen de convoyage sans fin (5A) forme un train polygonal couché de plusieurs branches de transport (T).

5. Dispositif de palettisation selon la revendication 4, **caractérisé en ce que** le moyen de convoyage sans fin (5A) forme un train polygonal rectangulaire.

6. Dispositif de palettisation selon l'une quelconque des revendications 1 à 5, **caractérisé en ce que** la direction de déplacement transversale (F2) forme avec la branche de transport (T) destinée à déposer les unités d'emballage (2) sur la palette de transport (1) un angle compris entre 1° et 179°, de préférence, un angle compris entre 45° et 135° et de manière particulièrement préférée, un angle droit.

7. Procédé pour équiper des palettes de transport de rangées ou de piles d'unités d'emballage en au moins une couche d'unités d'emballage avec un système d'alimentation destiné à amener les unités d'emballage à proximité de la palette de transport et avec un système de positionnement, pour positionner la palette de transport avec les unités d'emballage amenées, **caractérisé en ce que** les unités de transport sont reprises en continu à partir du système d'alimentation à l'aide d'un moyen de transport sans fin en disposition couchée et sont déposées directement sur la palette de transport, le long d'une parmi plusieurs sections de convoyage du moyen de convoyage sans fin en formant une rangée d'un compactage dense d'unités d'emballage et **en ce que** le moyen de transport sans fin couché est déplacé en tant qu'ensemble, par rapport à la palette de transport, pour positionner une rangée supplémentaire avec des unités d'emballage dans une direction transversale par rapport à l'orientation de la/des rangée/s déjà équipée/s d'unités d'emballage.
